# EUROPÄISCHE PATENTANMELDUNG

(11) **EP 2 708 205 A1**
(43) Veröffentlichungstag der Anmeldung: **19.03.2014**
(21) Anmeldenummer: 12405100.4
(22) Anmeldetag: 18.09.2012
(51) Int. Cl.: A61C 8/00

(54) **Einteiliges Zahnimplantat**

(71) Anmelder: Ceramics Solutions AG, 8002 Zürich (CH)
(72) Erfinder: König, Arno, 8044 Zürich (CH)
(74) Vertreter: EGLI-EUROPEAN PATENT ATTORNEYS

(57) **Zusammenfassung**

Die Erfindung betrifft eine Implantatvorrichtung (1, 9, 16), mit einem Verankerungsbereich (2, 18) zur Verankerung der Implantatvorrichtung (2, 18) in einem Knochen (14), sowie mit einem Kopfteilbereich (5, 19, 22). Dabei sind der Verankerungsbereich (2, 18) und der Kopfteilbereich (5, 19, 22) einteilig ausgebildet sind. Weiterhin sind Verankerungsbereich (2, 18) und Kopfteilbereich (5, 19, 22) in einem Winkel (21) zueinander angeordnet.

## Beschreibung

Die Erfindung bezieht sich auf eine Implantatvorrichtung, mit zumindest einem Verankerungsbereich zur Verankerung der Implantatvorrichtung in einem Knochen, sowie mit zumindest einem Kopfteilbereich, bei der zumindest Teile des Verankerungsbereichs und zumindest Teile des Kopfteilbereichs einteilig ausgebildet sind.

Aufgrund der Fortschritte in der Implantattechnologie werden in der Medizin in zunehmendem Masse Implantate für unterschiedlichste Aufgaben verwendet. Ein bekanntes Beispiel liegt in der Zahnheilkunde, in der in den letzten Jahren zunehmend Implantate zum Ersatz von Einzelzähnen oder als Befestigungsbasis für Brücken und Prothesen verwendet werden.

Die Implantate werden im Falle von Zahnimplantaten derzeit meist zwei- oder mehrteilig ausgeführt. Sie weisen üblicherweise zumindest einen Implantatkörper und ein Kopfteil (häufig auch als Pfeiler oder englisch/fachsprachlich als "abutment" bezeichnet) auf. Das Kopfteil liegt zunächst separat vor und ist - im Allgemeinen reversibel - mit dem Implantatkörper verbindbar. Der Implantatkörper dient einer Verankerung des Implantats im betreffenden Knochen (im Fall von Zahnimplantaten einem Kieferknochen), wobei die schlussendliche Verankerung aufgrund einer sogenannten Osseointegration, einer Einheilung des Implantatkörpers in lebendem Knochengewebe, erfolgt. Die zwei- oder mehrteilige Ausführung erlaubt es, dass bei einer Implantatbehandlung zunächst nur der Implantatkörper eingesetzt wird. Anschliessend kann dieser während einer Einheilphase weitgehend ungestört einheilen, weil aufgrund einer gegenüber benachbarten Zähnen verringerten Länge des Implantatkörpers (zum Teil ragt während der Einheilphase kein Teil des Implantats aus dem Zahnfleisch heraus) kaum Belastungen bei einer Nahrungsaufnahme auftreten.

Das Kopfteil dient der Befestigung einer Krone, Prothese oder ähnlichem und wird erst nach der Osseointegrationsphase in einem zweiten Eingriff mit dem Implantatkörper verbunden.

Ein Beispiel für derartige mehrteilige Zahnimplantate ist in der Europäischen Offenlegungsschrift EP 0 263 274 A1 beschrieben. Beim dort beschriebenen Implantat wird zunächst ein gesondert ausgebildeter Implantatkörper in den Kiefer des Patienten eingesetzt. Nach einer Einheilungsphase wird ein gesondert ausgebildetes, gewinkeltes Kopfteilelement (abutment) bzw. ein gesondert ausgebildetes, winkelverstellbares Kopfteilelement mit dem Implantatkörper mechanisch verbunden. Auf das Kopfteilelement wiederum wird eine Krone aufgesetzt.

Problematisch ist es bei derartigen mehrteiligen Implantaten, dass in der Regel mehrere chirurgische Eingriffe erfolgen müssen. Darüber hinaus ist der mehrteilige Aufbau mechanisch komplex (und damit entsprechend teuer) und zieht oftmals auch Nachteile hinsichtlich der Standzeit des Implantats nach sich.

Aus diesem Grunde wurde in letzter Zeit die Verwendung von einteiligen Implantaten vorgeschlagen. Dies liegt insbesondere auch in den Fortschritten im Bereich der Implantattechnologie hinsichtlich der Osseointegration begründet, die eine zum Teil erhebliche Verkürzung der Einheilphase in Verbindung mit einer höheren Belastbarkeit des Implantats auch während der Einheilphase ermöglicht.

Gerade im Schneidezahnbereich (insbesondere im Falle von Schneidezähnen des Oberkiefers) erweisen sich jedoch bislang einteilige Implantate als sehr nachteilig. Dies liegt in der besonderen Formgebung natürlicher Schneidezähne begründet. Diese weisen nämlich eine Biegung im Bereich der Zahnfleischkante auf. Bislang verwendete einteilige Implantate stehen nach dem Einschrauben/Einsetzen in Bereiche hervor, in denen natürlicherweise kein Zahnmaterial vorhanden ist. Eine einfache Verkürzung der Gesamtlänge des Implantats scheitert daran, dass hierunter die mechanische Stabilität der Verbindung zwischen Implantat und Krone (oder sonstiger prothetischer Elemente) zu sehr leiden würde. Bislang wird das Problem durch Beschleifen des Kopfbereichs des Implantats unmittelbar nach dem Einsetzen desselben gelöst. Dabei wird einfach die störende Kante mit einem Zahnarztbohrer abgetragen. Hierdurch werden jedoch gegebenenfalls vorhandene Oberflächenbeschichtungen des Implantats zerstört. Auch kann es (insbesondere bei spröden Materialien, wie insbesondere bei keramischen Materialien) zu einem Bruch des just eingesetzten Implantats kommen, was sehr unerwünscht ist.

Der vorliegenden Erfindung liegt die Aufgabe zugrunde, eine Implantatvorrichtung vorzuschlagen, die gegenüber im Stand der Technik bekannten Implantatvorrichtungen verbessert ist.

Diese Aufgabe wird gelöst durch eine Implantatvorrichtung mit den Merkmalen des unabhängigen Patentanspruchs 1.

Es wird vorgeschlagen, eine Implantatvorrichtung, die zumindest einen Verankerungsbereich zur Verankerung der Implantatvorrichtung in einem Knochen, sowie zumindest einen Kopfteilbereich aufweist und bei der zumindest Teile des Verankerungsbereichs und zumindest Teile des Kopfteilbereichs einteilig ausgebildet sind, derart auszubilden, dass zumindest ein Abschnitt des Verankerungsbereichs und zumindest ein Abschnitt des Kopfteilbereichs in einem Winkel zueinander angeordnet sind. Der Verankerungsbereich ist vorzugsweise zumindest bereichsweise aus einem Material gefertigt (oder weist zumindest bereichsweise ein solches Material auf), oder ist zumindest bereichsweise mit einer geeigneten Beschichtung versehen, dass ein gutes und stabiles Einheilen (Osseointegration) möglichst gefördert wird. Der Kopfteilbereich ist dagegen vorzugsweise derart gestaltet, dass eine möglichst vorteilhafte Verbindung mit einer Krone oder einem sonstigen prothetischen Element möglich ist. Diese Verbindung kann in grundsätzlich beliebiger Weise "direkt" (beispielsweise durch "direktes" Festschrauben, Festzementieren usw. einer Krone) oder "indirekt" unter Verwendung von weiteren Elementen (zum Beispiel Verlängerungselemente oder dergleichen) erfolgen. Verankerungsbereich und Kopfteilbereich (beziehungsweise zumindest Teile dieser Elemente) sind dabei zumindest teilweise einteilig ausgebildet, also insbesondere fest mechanisch (insbesondere untrennbar) miteinander verbunden bzw. als feste (untrennbare) mechanische Einheit ausgeführt. Insbesondere ist der Winkel in der Regel fixiert und kann nicht vom Benutzer "nachträglich" korrigiert werden (beispielsweise durch mechanisches Verbiegen oder durch eine feststellbare Gelenkeinrichtung). Dadurch kann eine in der Regel besonders belastbare und eine hohe Standzeit aufweisende Implantatvorrichtung realisiert werden. Der genannte einteilige Aufbau schliesst es nicht notwendigerweise aus, dass gegebenenfalls "Zusatzelemente" vorgesehen werden, die durchaus auch gesondert ausgebildet sein können. Hier ist zum Beispiel an die Implantatvorrichtung mechanisch stabilisierende Elemente, an die eigentliche Krone oder auch an Verlängerungselemente oder dergleichen zu denken. Bei dem Winkel handelt es sich in der Regel um einen Knickwinkel (obgleich auch Rotationswinkel oder anderweitige Winkel grundsätzlich zusätzlich oder alternativ denkbar sind). In aller Regel sind Verankerungsbereich und/oder Kopfteilbereich zumindest bereichsweise symmetrisch, insbesondere rotationssymmetrisch aufgebaut. Das schliesst es aber nicht aus, dass gewisse winkeldefinierende Einrichtungen vorgesehen werden, beispielweise Einrichtungen, die sicherstellen sollen, dass eine Krone nur in einer (oder einigen wenigen) Winkelpositionen befestigt werden kann. Erste Versuche haben gezeigt, dass es bei einem nicht "übertrieben gross dimensionierten" Kopfteilbereich möglich ist, dass der Verankerungsbereich der Implantatvorrichtung (und damit die Implantatvorrichtung als Gesamtheit) trotz des "taumelnden" Kopfteilbereichs in "klassischer Weise" in den Kieferknochen eingeschraubt werden kann, ohne dass es zu einer Blockade durch benachbarte Zähne kommt. Die "Winkelpositionierung" der Implantatvorrichtung ist erstaunlicherweise unkritisch. Das für eine Drehung der Implantatvorrichtung im Knochen erforderliche Drehmoment kann durch eine entsprechende Dimensionierung und Ausgestaltung von präpariertem Knochen (Zahnfach) und Implantatvorrichtung derart gewählt werden, dass der Zahnarzt die Implantatvorrichtung gewissermassen unmittelbar beim Einsetzen nach Augenmass "entsprechend weit eindreht". Insbesondere bei Verwendung von "Schutzkappen" und/oder bei einer entsprechenden Dimensionierung (Formgebung und/oder Grösse) des Kopfteilbereichs zur mechanischen Entlastung der Implantatvorrichtung kann dann eine gute Osseointegration erfolgen. Der Winkelübergang kann im Übrigen in Abhängigkeit von den konkreten Erfordernissen sowohl knickartig (also auf einen vergleichsweise kurzen Längenbereich konzentriert), als auch "fliessend" (also über einen längeren Längenbereich hinweg verteilt) erfolgen. Insbesondere ist es denkbar, dass der Kopfteilbereich über grössere Teile seiner Länge hinweg oder sogar über (im Wesentlichen) seine gesamte Länge hinweg gebogen ausgebildet ist (wobei sowohl ein konstanter, als auch ein veränderlicher Biegeradius denkbar ist). Auch sind "Mischformen" denkbar, beispielsweise dahingehend, dass nach einem ersten "Knick" ein kontinuierlicher, "fliessender" weiterer Winkelzuwachs erfolgt.

Besonders bevorzugt ist es, wenn bei der Implantatvorrichtung zumindest Teile des Verankerungsbereichs und zumindest Teile des Kopfteilbereichs einstückig ausgebildet sind. Hier kann also insbesondere der betreffende Werkstoff im Wesentlichen gewissermassen "nahtfrei" ausgebildet werden. Dadurch ist in der Regel eine besonders hohe mechanische Belastbarkeit und/oder Standzeit der Implantatvorrichtung möglich. Gegebenenfalls kann sich aber auch der Fertigungsprozess der Implantatvorrichtung vereinfachen und damit kostengünstiger sein.

In ersten Versuchen hat es sich als vorteilhaft erwiesen, wenn bei der Implantatvorrichtung der Winkel zwischen Verankerungsbereich und Kopfteilbereich im Bereich von 0° bis 30° liegt, bevorzugt im Bereich von 5° bis 25° liegt, besonders bevorzugt im Bereich von 7° bis 23°, insbesondere im Bereich von 10° bis 20° liegt. Hierdurch kann die Implantatvorrichtung insbesondere für den Ersatz von oberen Schneidezähnen genutzt werden. Es sind jedoch sowohl als untere, als auch als obere Intervallgrenze andere Winkelwerte denkbar, wie insbesondere 1°, 2°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39° oder 40°.

Weiterhin wird vorgeschlagen, die Implantatvorrichtung derart auszubilden, dass der Kopfteilbereich und oder der Verankerungsbereich zumindest abschnittsweise zylindrisch, insbesondere hohlzylindrisch ausgebildet ist. Mit einem derartigen Aufbau lässt sich eine in der Regel besonders einfache Einsetzbarkeit und/oder Verbindbarkeit, beispielsweise mit einer Krone, realisieren. Eine "zylindrische Formgebung" schliesst dabei eine zumindest abschnittsweise konusartige Modifikation des zylindrischen Körpers nicht aus.

Zusätzlich wird vorgeschlagen, dass die Implantatvorrichtung, insbesondere der Verankerungsbereich, zumindest bereichsweise ein keramisches Material aufweist, insbesondere zumindest im Wesentlichen aus einem keramischen Material ausgebildet ist. Derartige Materialien haben sich in letzter Zeit als besonders gewebeverträglich - und damit als in besonderem Masse geeignet für Implantatvorrichtungen (insbesondere für deren Verankerungsbereiche) erwiesen.

Insbesondere ist es möglich, dass es sich bei dem keramischen Material zumindest teilweise um Zirkoniumdioxid handelt. Dieses Material hat sich in jüngster Zeit als besonders geeignet für Implantatvorrichtungen erwiesen. Selbstverständlich ist es durchaus möglich und sinnvoll, das Zirkoniumoxid mit geeigneten Zuschlagsstoffen weiter zu verbessern.

Als sinnvoll erweist es sich, wenn bei der Implantatvorrichtung insbesondere der Verankerungsbereich und/oder der Kopfteilbereich zumindest abschnittsweise eine Gewindeeinrichtung aufweist. Auch hierdurch kann ein besonders einfaches und mechanisch stabiles Einsetzen der Implantatvorrichtung in einen Knochen und/oder eine einfache und mechanisch stabile Befestigung von Elementen (beispielsweise einer Krone) an der Implantatvorrichtung ermöglicht werden.

In diesem Zusammenhang ist es sinnvoll, wenn bei der Implantatvorrichtung zumindest eine Gewindeeinrichtung zumindest bereichsweise schneidend und/oder verdrängend ausgebildet ist. Dies kann insbesondere deshalb von Vorteil sein, da derartige Gewindeeinrichtungen beim Einschrauben keine Späne oder dergleichen erzeugen. Dies ist insbesondere im Zusammenhang mit Implantaten vorteilhaft, da hier Späne oftmals unerwünscht sind und/oder schlecht entfernt werden können.

Besonders sinnvoll ist es, wenn die Implantatvorrichtung als Zahnimplantat, insbesondere als Schneidezahnimplantat ausgebildet ist. Hier kann die Implantatvorrichtung ihre ihr eigenen Eigenschaften besonders vorteilhaft entfalten.

Weiterhin kann die Implantatvorrichtung auch mit einem gesondert handhabbaren Kopfteilelement versehen werden. Dieses kann beispielsweise als eine Art "Verlängerungsstück" für einen fest mit dem Verankerungsbereich verbundenen Kopfteilbereich verwendet werden. Ein derartiges Kopfteilelement kann in einer "Einbausituation" zwischen schlussendlich aufgebrachter Zahnkrone und dem eigentlichen Implantat liegen.

Weitere Einzelheiten der Erfindung und insbesondere beispielhafte Ausführungsformen der vorgeschlagenen Vorrichtung werden im Folgenden anhand der beigefügten Zeichnungen erläutert. Es zeigen:
- Fig. 1: ein erstes Ausführungsbeispiel für ein Implantat in einer schematischen Querschnittsansicht;
- Fig. 2: ein zweites Ausführungsbeispiel für ein Implantat in einer schematischen Querschnittsansicht;
- Fig. 3: einen schematischen Querschnitt durch den Kieferbereich eines Patienten mit einem Zahnimplantat.

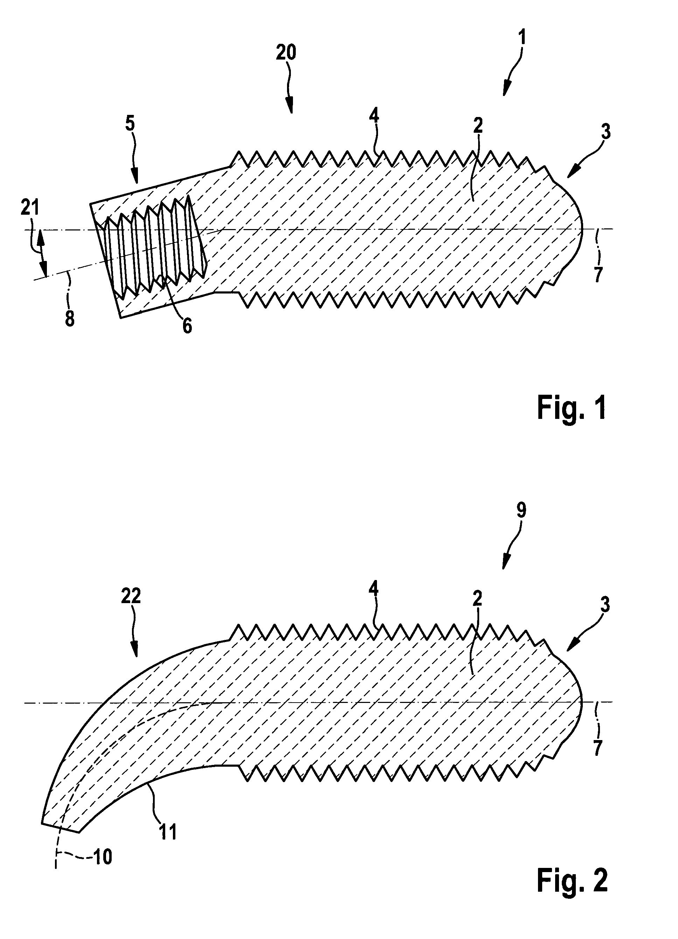

In Fig. 1 ist ein erstes mögliches Ausführungsbeispiel für ein Zahnimplantat 1 in einem schematischen Querschnitt dargestellt. Das Zahnimplantat 1 weist in an sich bekannter Weise einen Verankerungsbereich 2 für die Verankerung im Kieferknochen eines Patienten auf. Der Verankerungsbereich 2 ist derart ausgebildet und besteht aus derart gewählten Materialien, dass der Verankerungsbereich 2 fest mit dem lebenden Knochengewebe des Patienten verwächst. Dies wird fachsprachlich als Osseointegration bezeichnet.

Die erste Fixierung des Zahnimplantats 1 im Knochengewebe des Patienten erfolgt mit Hilfe eines Gewindes 4, welches auf der Aussenseite des Verankerungsbereichs 2 des Zahnimplantats 1 ausgebildet ist. Das Gewinde 4 ist dabei im Bereich eines Bodenbereichs 3 des Verankerungsbereichs 2 selbstschneidend ausgeführt, wohingegen es in einem oberen Bereich 20 des Verankerungsbereichs 2 verdrängend ausgebildet ist. Hierdurch wird einerseits das Einschrauben des Zahnimplantats 1 in den vorbereiteten Kieferknochen des Patienten erleichtert (selbstschneidender Abschnitt). Andererseits kann durch den verdrängenden Abschnitt des Gewindes 4 ein vergleichsweise guter initialer mechanischer Halt gewährleistet werden.

Der Verankerungsbereich 2 des Zahnimplantats 1 ist aus einem Material gefertigt, welches ein gutes Einwachsen des Zahnimplantats 1 in das lebende Knochengewebe des Patienten ermöglicht. Im vorliegend dargestellten Ausführungsbeispiel besteht der Verankerungsbereich 2 aus einem mit geeigneten Zuschlägen versehenen Zirkoniumdioxidmaterial.

An dem (im eingesetzten Zustand) vom Kieferknochen des Patienten beabstandet liegenden Ende des Zahnimplantats 1 ist ein Kopfbereich 5 einteilig, bevorzugt einstückig, angeformt. Der Kopfbereich 5 des Zahnimplantats 1 dient schlussendlich zur Befestigung einer Zahnkrone, nachdem das Zahnimplantat 1 ausreichend eingeheilt ist. Um die Befestigung der Zahnkrone zu erleichtern, ist im vorliegend dargestellten Ausführungsbeispiel ein Innengewinde 6 im hohlzylindrisch ausgebildeten Kopfbereich 5 eingeformt.

Wie man Fig. 1 entnehmen kann, weisen die Längsachse 7 des (rotationssymmetrisch ausgebildeten) Verankerungsbereichs 2 sowie die Längsachse 8 des (ebenfalls rotationssymmetrisch ausgebildeten) Kopfbereichs 5 einen Winkel 21 zueinander auf, der im vorliegend dargestellten Ausführungsbeispiel 15° beträgt. Sinnvollerweise steht dem Zahnarzt ein Satz unterschiedlicher Zahnimplantate 1 zur Verfügung, aus denen er das für den jeweiligen Patienten geeignetste heraussuchen kann. Die unterschiedlichen Zahnimplantate 1 können sich insbesondere hinsichtlich ihrer Durchmesser und/oder Längen im Verankerungsbereich 2 sowie ihrer Winkel 21 unterscheiden. Beispielsweise könnte ein Satz unterschiedlicher Zahnimplantate 1 (neben unterschiedlichen Längen und Durchmesser) in 2°-Schritten, 2,5°-Schritten oder 5°-Schritten einen Winkelbereich zwischen 15° und 25° oder zwischen 10° und 30° abdecken.

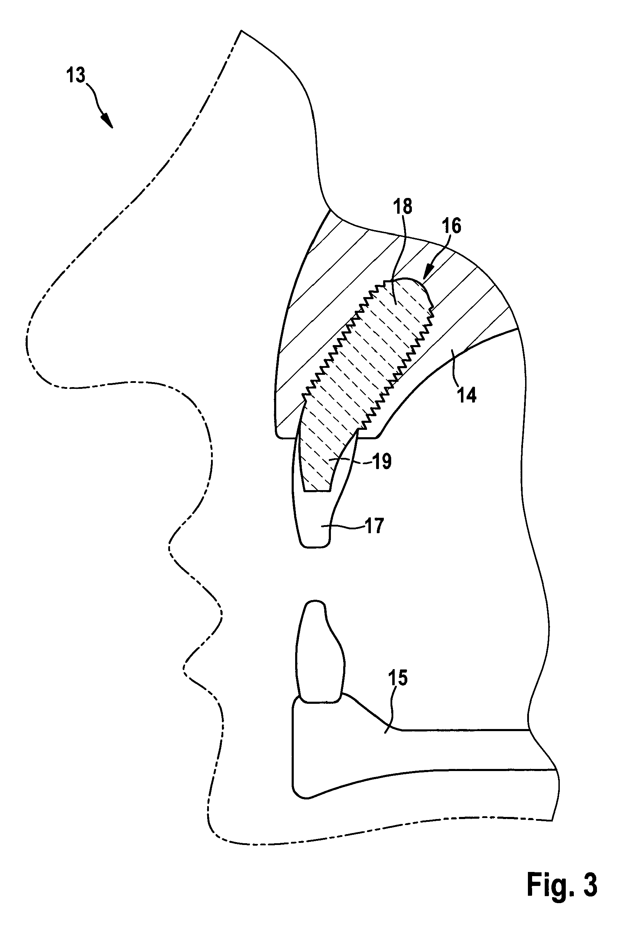

Durch die (unterschiedliche) Abwinkelung 21 von Bodenbereich 2 und Kopfbereich 5 ist das Zahnimplantat 1 in besonderem Masse für den Einsatz als Schneidezahnimplantat im Oberkieferbereich eines Patienten geeignet (vergleiche auch mit Fig. 3).

Es ist darauf hinzuweisen, dass es bei einer geeigneten Dimensionierung des Zahnimplantats 1 (insbesondere des Kopfbereichs 5) ohne weiteres möglich ist, das Zahnimplantat 1 in einen Kieferknochen einzuschrauben, ohne dass es zu einer Blockade zwischen dem Kopfbereich 5 und benachbarten Zähnen des Patienten kommt. Diese Anmerkung gilt im Übrigen auch für anderweitige (sinnvolle) Bauausführungen der vorliegend vorgeschlagenen Implantatvorrichtung.

In Fig. 2 ist ein zweites Ausführungsbeispiel für ein Zahnimplantat 9, ebenfalls in schematischer Querschnittsdarstellung, dargestellt. Vom Aufbau her ähnelt das vorliegend dargestellte Zahnimplantat 9 dem vorab beschriebenen Ausführungsbeispiel eines Zahnimplantats 1, welches in Fig. 1 dargestellt ist. Dies gilt insbesondere für den Verankerungsbereich 2 des Zahnimplantats 9, weswegen aus Gründen der Einfachheit identische Bezugszeichen für zumindest funktionsanaloge Baugruppen verwendet wurden.

Beim vorliegenden, zweiten Ausführungsbeispiel eines Zahnimplantats 9 ist im Kopfbereich 22 eine Art gebogene Nase 11 vorgesehen. Die gebogene Nase 11 folgt dabei von ihrer Kontur her annähernd einem Kreisbogensegment 10, welches in Fig. 2 als gestrichelte Linie eingezeichnet ist. Der Übergang von der (geraden) Längsachse 7 des Verankerungsbereichs 2 zum gebogenen/abgeknickten Bereich 22 der gebogenen Nase 11 erfolgt somit stetig und sukzessive anwachsend.

Möglich sind aber selbstverständlich auch "Mischformen" aus den Zahnimplantaten 1 und 9, derart, dass beispielsweise einerseits beim Übergang zwischen Verankerungsbereich 2 und Kopfbereich 5, 22 bzw. Nasenbereich 22 zunächst ein "Winkelsprung" auftritt und anschliessend noch ein weiterer "stetiger Winkelzuwachs", beispielsweise durch die Biegung einer gebogenen Nase 11, erfolgt.

Die gebogene Nase 11 weist neben ihrer gebogenen Form noch eine sich konisch verjüngende Formgebung auf. Dadurch kann eine Krone beispielsweise in an sich bekannter Weise besonders einfach und stabil auf dem Zahnimplantat 9 festzementiert werden.

Im vorliegend dargestellten Ausführungsbeispiel ist (anstelle einer grundsätzlich möglichen rotationssymmetrischen Ausbildung) die gebogene Nase 22 mit einer ovalartigen bzw. elliptischen Formgebung versehen. Dadurch ist die Krone einerseits drehfest auf dem Zahnimplantat 9 befestigbar. Andererseits kann die Krone lediglich in einer definierten Winkelposition auf dem Zahnimplantat 9 befestigt werden, was die Herstellung und das Einsetzen der Krone erleichtern kann.

In Fig. 3 ist aus Veranschaulichungsgründen die "Einbausituation" eines Zahnimplantats 1, 9 im Kieferbereich 13 eines Patienten in Form eines schematischen Querschnitts dargestellt. Hierbei kann es sich um eines der beiden in Fig. 1 oder Fig. 2 dargestellten Zahnimplantate 1, 9, oder aber auch um andere Ausbildungsformen eines Zahnimplantats handeln.

In Fig. 3 ist der Oberkiefer 14 und der Unterkiefer 15 im Kieferbereich 13 des Patienten zu erkennen. Der Unterkiefer 15 hält im in Fig. 3 dargestellten Querschnitt (der nicht vollständig mittig durch den Patienten verläuft, sondern so gelegt ist, dass er die Zähne 1-1 und 4-1 jeweils im Wesentlichen mittig schneidet) noch den natürlichen unteren Schneidezahn (vorliegend 4-1). Der obere Schneidezahn (1-1) ist jedoch durch ein Zahnimplantat 16 ersetzt.

Zu erkennen ist dabei die Einbaulage des Verankerungsbereichs 18 des Zahnimplantats 16 im Oberkiefer 14 des Patienten. Aufgrund der Formgebung natürlicher oberer Schneidezähne (und damit auch des korrespondierenden Zahnfachs) muss der Kopfbereich 19 des Zahnimplantats 16 zur Realisierung eines ästhetischen und funktionalen Zahnersatzes einen Winkel gegenüber dem Verankerungsbereich 18 aufweisen. Dank dieses Winkels (von beispielsweise 15°) kann eine Zahnkrone 17 optisch unauffällig und hinsichtlich der Gebisswirkung funktionstüchtig auf dem Kopfbereich 19 des Zahnimplantats 16 befestigt werden.

## Patentansprüche

1. Implantatvorrichtung (1, 9, 16), mit zumindest einem Verankerungsbereich (2, 18) zur Verankerung der Implantatvorrichtung (2, 18) in einem Knochen (14), sowie mit zumindest einem Kopfteilbereich (5, 19, 22), wobei zumindest Teile des Verankerungsbereichs (2, 18) und zumindest Teile des Kopfteilbereichs (5, 19, 22) einteilig ausgebildet sind, **dadurch gekennzeichnet, dass**
zumindest ein Abschnitt des Verankerungsbereichs (2, 18) und zumindest ein Abschnitt des Kopfteilbereichs (5, 19, 22) in einem Winkel (21) zueinander angeordnet sind.

2. Implantatvorrichtung (1, 9, 16) nach Anspruch 1, **dadurch gekennzeichnet, dass** zumindest Teile des Verankerungsbereichs (2, 18) und zumindest Teile des Kopfteilbereichs (5, 19, 22) einstückig ausgebildet sind.

3. Implantatvorrichtung (1, 9, 16) nach einem der vorangehenden Ansprüche, **dadurch gekennzeichnet, dass** der Winkel (21) zwischen Verankerungsbereich (2, 18) und Kopfteilbereich (5, 19, 22) im Bereich von 0° bis 30° liegt, bevorzugt im Bereich von 5° bis 25° liegt, besonders bevorzugt im Bereich von 7° bis 23°, insbesondere im Bereich von 10° bis 20° liegt.

4. Implantatvorrichtung (1, 9, 16) nach einem der vorangehenden Ansprüche, **dadurch gekennzeichnet, dass** der Kopfteilbereich (5, 19, 22) und/oder der Verankerungsbereich (2, 18) zumindest abschnittsweise zylindrisch (5), insbesondere hohlzylindrisch (5) ausgebildet ist.

5. Implantatvorrichtung (1, 9, 16) nach einem der vorangehenden Ansprüche, **dadurch gekennzeichnet, dass** die Implantatvorrichtung (1, 9, 16), insbesondere der Verankerungsbereich (2, 18), zumindest bereichsweise ein keramisches Material aufweist, insbesondere zumindest im Wesentlichen aus einem keramischen Material ausgebildet ist.

6. Implantatvorrichtung (1, 9, 16) nach Anspruch 5, **dadurch gekennzeichnet, dass** es sich bei dem keramischen Material zumindest teilweise um Zirkoniumdioxid handelt.

7. Implantatvorrichtung (1, 9, 16) nach einem der vorangehenden Ansprüche, **dadurch gekennzeichnet, dass** die Implantatvorrichtung (1, 9, 16), insbesondere der Verankerungsbereich (2, 18) und/oder der Kopfteilbereich (5, 19, 22) zumindest abschnittsweise eine Gewindeeinrichtung (4, 6) aufweist.

8. Implantatvorrichtung (1, 9, 16) nach Anspruch 7, **dadurch gekennzeichnet, dass** zumindest eine Gewindeeinrichtung (4, 6) zumindest bereichsweise schneidend und/oder verdrängend ausgebildet ist.

9. Implantatvorrichtung (1, 9, 16) nach einem der vorangehenden Ansprüche, **dadurch gekennzeichnet, dass** sie als Zahnimplantat, insbesondere als Schneidezahnimplantat ausgebildet ist.

10. Implantatvorrichtung (1, 9, 16) nach einem der vorangehenden Ansprüche, **gekennzeichnet durch** ein gesondert handhabbares Kopfteilelement.
